# EUROPÄISCHE PATENTANMELDUNG

(11) **EP 3 301 615 A1**
(43) Veröffentlichungstag der Anmeldung: **04.04.2018**
(21) Anmeldenummer: 17190021.0
(22) Anmeldetag: 08.09.2017
(51) Int. Cl.: G06K 13/08

(54) **VORRICHTUNG ZUM REINIGEN EINER CHIPKARTENAUFNAHME**

(30) Priorität: 28.09.2016 DE 102016218743
(71) Anmelder: Continental Automotive GmbH, 30165 Hannover (DE)
(72) Erfinder: Steiert, Michael, 78048 Villingen-Schwenningen (DE); Gut, Michael, 78199 Bräunlingen (DE)

(57) **Zusammenfassung**

Die Erfindung bezieht sich auf eine Vorrichtung 12 zum Reinigen einer einen Einführschlitz 6 zum Einführen einer Chipkarte aufweisenden Chipkartenaufnahme 2, wobei die Vorrichtung 12 ein durch den Einführschlitz 6 in die Chipkartenaufnahme 2 zumindest teilweise einführbares Reinigungselement 14 aufweist. Für eine schonende Reinigung wird vorgeschlagen, dass das Reinigungselement 14 ein in die Chipkartenaufnahme 2 einführbares Ansaugelement 16 aufweist.

## Beschreibung

Die Erfindung bezieht sich auf eine Vorrichtung zum Reinigen einer einen Einführschlitz zum Einführen einer Chipkarte aufweisenden Chipkartenaufnahme, wobei die Vorrichtung ein durch den Einführschlitz in die Chipkartenaufnahme zumindest teilweise einführbares Reinigungselement aufweist.

Es ist beispielsweise ein Kraftfahrzeuggerät bekannt, das als digitaler Fahrtschreiber für ein Kraftfahrzeug ausgebildet ist und eine Chipkartenaufnahme aufweist. Ferner weist das bekannte Kraftfahrzeuggerät einen elektrische Kontakte aufweisenden Kontaktsatz zur Kontaktierung einer elektrische Kontaktflächen aufweisenden Chipkarte auf. Bei in der Chipkartenaufnahme in einer Betriebsposition angeordneter Chipkarte sind die Kontaktflächen der Chipkarte mit den Kontakten des Kontaktsatzes in Berührung.

Zum Ein- und Auslesen von Daten in den beziehungsweise aus dem Fahrtschreiber sind Chipkarten, unter anderem fahrerbezogene Chipkarten, vorgesehen. Fahrerbezogene Chipkarten sind jeweils einem Fahrer des Kraftfahrzeugs zugeordnet und speichern unter anderem dessen fahrerspezifische Daten. Für einen Datenaustausch mit einer Chipkarte besitzt der Fahrtschreiber eine Chipkartenaufnahme.

Ist eine Chipkarte in einer Betriebsposition in der Chipkartenaufnahme angeordnet, so sind elektrische Kontaktflächen der Chipkarte mit elektrischen Kontakten des Kontaktsatzes des Fahrtschreibers in Berührung, wodurch eine Datenübertragung zwischen der Chipkarte und zum Beispiel einer Gerätesteuereinheit des Fahrtschreibers ermöglicht wird. Beispielsweise aufgrund einer Verschmutzung der Kontakte des Kontaktsatzes und einer sich daraus ergebenden ungenügenden Kontaktierung der Chipkarte mit dem Kontaktsatz kann es grundsätzlich zu einer unerwünschten Beeinträchtigung der Datenübertragung kommen.

Um einer Verschmutzung der Kontakte entgegenzuwirken, ist eine als in die Chipkartenaufnahme einführbare Reinigungskarte ausgebildete Vorrichtung der eingangs genannten Art bekannt. Die Reinigungskarte weist ein Reinigungsfeld auf und ist mittels einer aus der Chipkartenaufnahme herausragenden Betätigungslasche bewegbar. Bei einer Bewegung der Reinigungskarte in der Chipkartenaufnahme mittels der Betätigungslasche wird das Reinigungsfeld an den Kontakten des Kontaktsatzes entlang bewegt, wobei Reinigungsfeld und Kontakte in Berührung miteinander sind.

Aufgabe der Erfindung ist es, eine Vorrichtung der eingangs genannten Art zu schaffen, die eine zuverlässige und schonende Reinigung der Chipkartenaufnahme ermöglicht.

Diese Aufgabe wird erfindungsgemäß dadurch gelöst, dass das Reinigungselement ein in die Chipkartenaufnahme einführbares Ansaugelement aufweist.

Von besonderem Vorteil ist, dass mit der erfindungsgemäßen Vorrichtung keine bei einem Reinigen mit chemischen und/oder abrasiven Mitteln, wie es mit der bekannten Reinigungskarte erfolgt, anfallenden Rückstände, zum Beispiel von den Kontakten entfernte, aber nicht an der Reinigungskarte anhaftende Schmutzpartikel, in der Chipkartenaufnahme verbleiben. Vielmehr können solche Rückstände mit Hilfe der Erfindung vorteilhaft abgesaugt werden. Zudem erlaubt die Erfindung ein berührungsloses Reinigen der Kontakte, so dass eine grundsätzlich nicht auszuschließende Schädigung der Kontakte aufgrund Materialabtrags bei oftmaligen Reinigungsvorgängen vorteilhaft vermieden wird.

Darüber hinaus ermöglicht die erfindungsgemäße Vorrichtung vorteilhaft ein Reinigen nicht nur von Kontakten, sondern der gesamten Chipkartenaufnahme. Somit können insbesondere auch Schmutzpartikel entfernt werden, die andernfalls eine Bewegbarkeit von beweglichen Teilen der Chipkartenaufnahme beeinträchtigen könnten.

Regelmäßig ist eine Chipkartenaufnahme zur Aufnahme von Chipkarten einer bestimmten Größe eingerichtet. Grundsätzlich ist die Erfindung für Chipkartenaufnahmen beliebiger Größe, das heißt für jeweilige Chipkartenaufnahmen zur Aufnahme von Chipkarten beliebiger, jedoch mit der jeweiligen Chipkartenaufnahme korrespondierenden Chipkartengröße, geeignet. Besonders vorteilhaft ist die Erfindung jedoch beispielsweise zum Reinigen einer Chipkartenaufnahme, welche Chipkartenaufnahme Chipkarten der Größe ID-1 gemäß ISO/IEC 7810 (zum Beispiel von 2003-11-01) aufnehmen kann und für solche Chipkarten vorgesehen ist, geeignet.

Das Ansaugelement der erfindungsgemäßen Vorrichtung kann beispielsweise eine Größe aufweisen, welche der Größe ID-1 gemäß ISO/IEC 7810 (zum Beispiel von 2003-11-01) entspricht. Dabei kann zum Beispiel auch ein zusätzlicher Toleranzbereich von ±3 mm in den Außenabmessungen für das Ansaugelement vorgesehen sein.

Grundsätzlich ist die Erfindung zum Reinigen von Chipkartenaufnahmen beliebiger Art geeignet. Besonders vorteilhaft ist die Erfindung aber aufgrund der hohen Verschmutzungsgefährdung, insbesondere durch Staub und Feuchtigkeit, in Kraftfahrzeugen in Verbindung mit einem Kraftfahrzeuggerät, beispielsweise einem eine Chipkartenaufnahme aufweisenden digitalen Fahrtschreiber oder einem eine Chipkartenaufnahme aufweisenden Kraftfahrzeugmautgerät. Die erfindungsgemäße Vorrichtung kann somit vorzugsweise zum Reinigen einer Chipkartenaufnahme eines Kraftfahrzeuggeräts, insbesondere einer Chipkartenaufnahme eines digitalen Fahrtschreibers oder einer Chipkartenaufnahme eines Kraftfahrzeugmautgeräts, verwendet werden.

Zusätzliche vorteilhafte Weiterbildungen der Erfindung sind in den Unteransprüchen angegeben.

Gemäß einer vorteilhaften Weiterbildung der Erfindung weist das Ansaugelement eine der Chipkartenbreite entsprechende Ansaugelementbreite auf. Dadurch ist das Ansaugelement besonders leicht und verkantungssicher in die Chipkartenaufnahme einführbar.

Einen vorteilhaft besonders einfachen Aufbau kann die erfindungsgemäße Vorrichtung haben, wenn gemäß einer anderen Weiterbildung der Erfindung das Ansaugelement als Hohlkörper ausgebildet ist und zumindest eine mit einem einen Saugraum bildenden Hohlraum des Hohlkörpers verbundene Saugöffnung aufweist.

Einer anderen vorteilhaften Weiterbildung der Erfindung entsprechend ist das Ansaugelement als quaderförmiger Hohlkörper ausgebildet. Dadurch ist das Ansaugelement besonders einfach herstellbar. Vorzugsweise kann nicht nur das Ansaugelement, sondern das gesamte Reinigungselement als quaderförmiger Hohlkörper ausgebildet sein. Auf diese Weise kann das Reinigungselement zum Beispiel insgesamt geschlossen sein mit Ausnahme einer oder mehrerer Ansaugöffnungen in dem Ansaugelement sowie einer Saugseitenöffnung oder einem Sauganschluss.

Eine erhöhte Wirksamkeit des Ansaugelements kann vorteilhaft erreicht werden, wenn gemäß einer anderen Weiterbildung der Erfindung das Ansaugelement zumindest einen Ansaugkanal aufweist. Vorzugsweise kann das Ansaugelement dabei mehrere parallel angeordnete Ansaugkanäle aufweisen. Der Ansaugkanal oder die Ansaugkanäle können geschlossen und somit beispielsweise röhrenförmig ausgebildet sein. Zum Beispiel kann der Saugraum als Ansaugkanal ausgebildet sein. Es ist aber auch denkbar, dass der Ansaugkanal oder die Ansaugkanäle in ihrer Längsrichtung nach außen hin offen sind und zum Beispiel jeweils eine Rille oder Rinne an der Außenseite des Reinigungselements und damit auch an der Außenseite des Ansaugelements bilden.

Einer vorteilhaften Weiterbildung der Erfindung gemäß weist das Reinigungselement eine Ansaugöffnung auf, und der Ansaugkanal oder die Ansaugkanäle des Ansaugelements sind an einer Außenseite des Reinigungselements an der Ansaugöffnung angeordnet. So können der Ansaugkanal beziehungsweise die Ansaugkanäle zur großräumigen Reinigung der Chipkartenaufnahme vergleichsweise tief in die Chipkartenaufnahme hinein eingeführt werden. In Verbindung mit der Ausgestaltung als Ansaugkanal kann so eine besonders gute Reinigungswirkung erreicht werden. Anzusaugendes Gut, insbesondere Schmutzpartikel, werden von dem Ansaugkanal beziehungsweise den Ansaugkanälen geführt aus der Chipkarteaufnahme heraus in die Ansaugöffnung des Reinigungselements hinein gesaugt.

Gemäß einer vorteilhaften Weiterbildung der Erfindung sind zumindest zwei Ansaugkanäle vorhanden, und das Reinigungselement weist die Ansaugkanäle an seiner Außenseite in Form von parallelen Längsrillen auf. Die Längsrillen sind dabei vorzugsweise parallel zur Einführrichtung des Reinigungselements in die Chipkartenaufnahme ausgerichtet.

Man könnte sich vorstellen, dass die erfindungsgemäße Vorrichtung beispielsweise untrennbarer Bestandteil eines Saugschlauches und zum Beispiel eine endseitige Ausbildung des Saugschlauches ist. Von besonderem Vorteil unter anderem für eine Austauschbarkeit der Vorrichtung ist es hingegen, wenn gemäß einer vorteilhaften Weiterbildung der Erfindung die Vorrichtung einen Sauganschluss für eine Verbindung des Reinigungselements mit einer Ansaugleitung einer Saugeinrichtung aufweist. Der Sauganschluss kann Bestandteil des Reinigungselements sein; es kann sich bei dem Sauganschluss aber auch um ein Element der erfindungsgemäßen Vorrichtung zusätzlich zu dem Reinigungselement handeln.

Einer vorteilhaften Weiterbildung der Erfindung entsprechend ist vorgesehen, dass der Sauganschluss lösbar mit dem Ansaugelement verbunden ist. Dabei kann der Sauganschluss entweder lösbar unmittelbar mit dem Ansaugelement oder lösbar mittelbar, das heißt über ein Zwischenelement, mit dem Ansaugelement verbunden sein. Das Ansaugelement oder das Reinigungselement können so beispielsweise mit unterschiedlichen Sauganschlüssen zur Verbindung mit Ansaugleitungen unterschiedlichen Typs versehen werden.

Vorteilhaft kann der Sauganschluss zusätzlich zum Beispiel als Anschlag bei einem Einführen des Ansaugelements in die Chipkartenaufnahme dienen, wenn gemäß einer anderen vorteilhaften Weiterbildung der Erfindung der Sauganschluss gegenüber dem Ansaugelement vorspringt quer zur Einführrichtung des Ansaugelements in die Chipkartenaufnahme.

Ausführungsbeispiele der Erfindung sind in der Zeichnung schematisiert und skizzenhaft dargestellt und werden im Folgenden näher beschrieben. Es zeigen
- Figur 1: ein Kraftfahrzeuggerät mit einer Chip-kartenaufnahme,
- Figur 2: eine Vorrichtung zum Reinigen einer Chipkartenaufnahme,
- Figuren 3a, 3b, 3c: verschiedenartige Saugöffnungen,
- Figur 4: eine Vorrichtung zum Reinigen einer Chipkartenaufnahme in einer Schnittansicht,
- Figur 5: die Vorrichtung nach Figur 4 in einer Seitenansicht,
- Figuren 6a, 6b: verschiedenartige Reinigungselemente in einer Schnittansicht,
- Figur 7: eine Vorrichtung zum Reinigen einer Chipkartenaufnahme in einer teilweise geschnittenen Ansicht und
- Figuren 8a, 8b, 8c: verschiedenartige Sauganschlüsse.

Sich jeweils entsprechende Elemente sind in allen Figuren mit gleichen Bezugszeichen versehen.

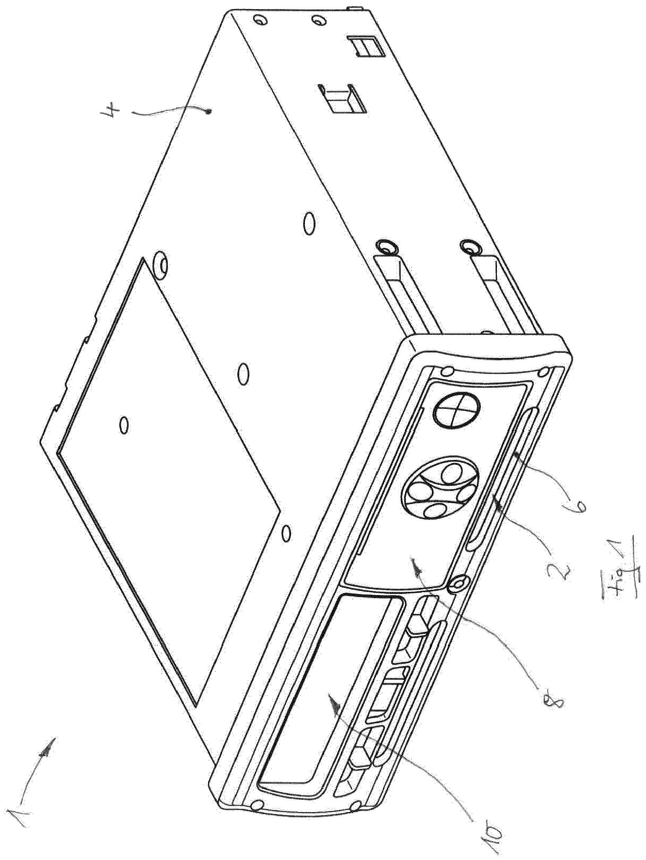

Figur 1 zeigt in einer perspektivischen Ansicht schematisiert ein Kraftfahrzeuggerät 1, das in diesem Ausführungsbeispiel als digitaler Fahrtschreiber ausgebildet ist, aber auch ein anderes Kraftfahrzeuggerät, zum Beispiel ein Kraftfahrzeugmautgerät, sein könnte. Das Kraftfahrzeuggerät 1 weist eine Chipkartenaufnahme 2 auf, die sich innerhalb eines Gerätegehäuses 4 des Kraftfahrzeuggeräts 1 befindet. Das Gerätgehäuse 4 des Kraftfahrzeuggeräts 1 kann hier auch als Fahrtschreibergehäuse bezeichnet werden.

Von der Chipkartenaufnahme 2 ist in der Darstellung nach Figur 1 lediglich ein Einführschlitz 6 zu erkennen. Durch den Einführschlitz 6 wird eine Chipkarte in die Chipkartenaufnahme 2 eingeführt und aus dieser wieder ausgeführt und entnommen. Weiterhin weist das Kraftfahrzeuggerät 1 eine Druckereinheit 8 und eine Anzeigeeinheit 10 auf, die sich ebenfalls innerhalb des Gerätegehäuses 4 befinden.

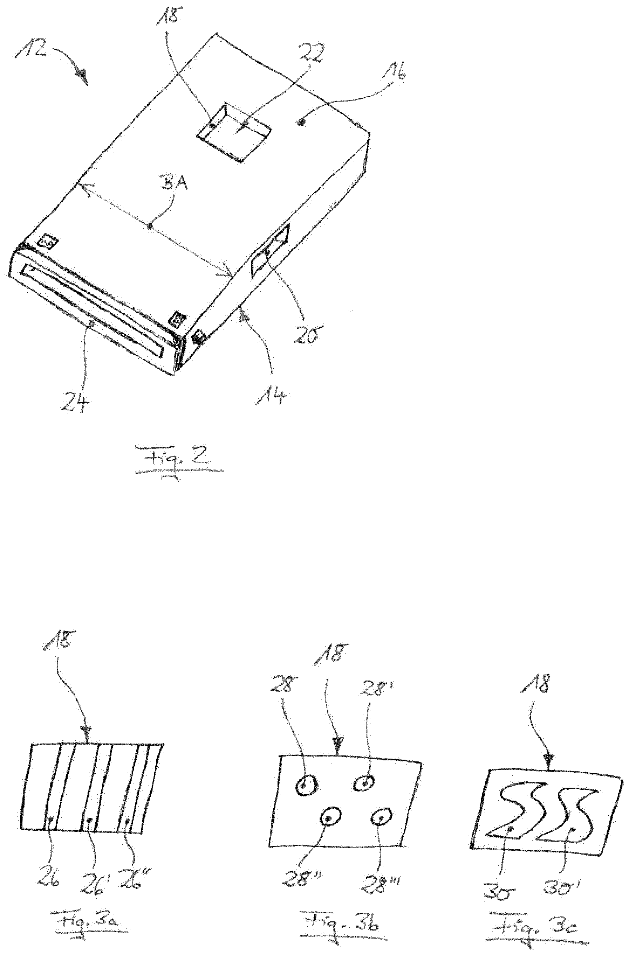

Figur 2 zeigt in einer perspektivischen Ansicht eine Vorrichtung 12 zum Reinigen einer einen Einführschlitz 6 (vergleiche Figur 1) zum Einführen einer Chipkarte aufweisenden Chipkartenaufnahme 2. Die Vorrichtung 12 weist ein durch den Einführschlitz 6 in die Chipkartenaufnahme 2 zumindest teilweise einführbares Reinigungselement 14 auf. Zudem weist das Reinigungselement 14 ein in die Chipkartenaufnahme 2 einführbares Ansaugelement 16 auf.

Grundsätzlich korrespondiert eine Chipkartenbreite der in die Chipkartenaufnahme 2 einführbaren und von dieser aufnehmbaren Chipkarte mit einer Schlitzbreite des Einführschlitzes 6, sodass die Chipkarte mit nur geringem Spiel vorteilhaft geführt in den Einführschlitz 6 und die Chipkartenaufnahme 2 einführbar ist. In diesem Ausführungsbeispiel weist das Ansaugelement 16 eine der Chipkartenbreite entsprechende Ansaugelementbreite BA auf. Die Ansaugelementbreite BA entspricht beispielsweise einer Breite einer Chipkarte der Größe ID-1 gemäß ISO/IEC 7810 (zum Beispiel von 2003-11-01).

Das Ansaugelement 16 ist hier ferner als Hohlkörper ausgebildet, und es weist zwei Saugöffnungen 18, 20 auf. Die Saugöffnungen 18, 20 sind mit einem einen Saugraum bildenden Hohlraum 22 des Hohlkörpers verbunden. In diesem Ausführungsbeispiel ist nicht nur das Ansaugelement 16, sondern das Reinigungselement 14 insgesamt als Hohlkörper, und zwar als quaderförmiger Hohlkörper, ausgebildet. Der Saugraum des Ansaugelements 16 bildet einen Ansaugkanal.

Die Vorrichtung 12 zum Reinigen der Chipkartenaufnahme 2 weist überdies einen Sauganschluss 24 für eine Verbindung des Reinigungselements 14 mit einer Ansaugleitung einer Saugeinrichtung auf. Der Sauganschluss 24 ist hier Bestandteil des Reinigungselements 14. Der Sauganschluss 24 ist lösbar mit dem Ansaugelement 16 des Reinigungselements 14 verbunden.

Beispiele für verschiedenartige Ausbildungen von Saugöffnungen sind in Figuren 3a bis 3c dargestellt. So zeigt Figur 3a eine Saugöffnung 18, die drei schlitzartige, lineare Saugausnehmungen 26, 26', 26" aufweist. Figur 3b zeigt eine Saugöffnung 18 mit vier kreisförmigen Saugausnehmungen 28, 28', 28", 28'''. Und Figur 3c zeigt eine Saugöffnung 18, die zwei schlitzartige, wellenförmige Saugausnehmungen 30, 30' aufweist.

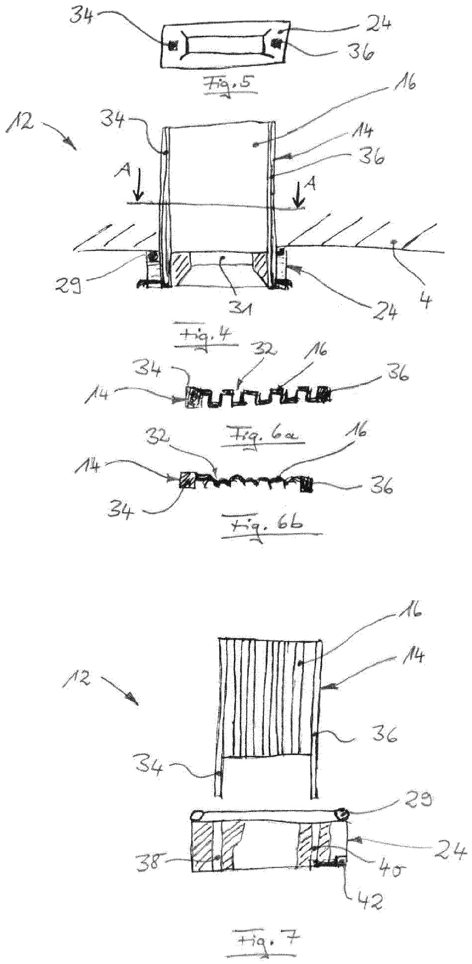

Eine weitere Vorrichtung 12 zum Reinigen einer Chipkartenaufnahme 2 (vergleiche Figur 1) zeigt in einer Schnittansicht Figur 4. Die Vorrichtung 12 weist ein Reinigungselement 14 mit einem Ansaugelement 16 auf, welches Ansaugelement 16 hier in die in einem Gerätegehäuse 4 angeordnete Chipkartenaufnahme 2 eingeführt ist.

Darüber hinaus weist die Vorrichtung 12 einen Sauganschluss 24 für eine Verbindung des Reinigungselements 14 mit einer Ansaugleitung einer Saugeinrichtung auf. Der Sauganschluss 24 springt gegenüber dem Ansaugelement 16 quer zur Einführrichtung des Ansaugelements 16 in die Chipkartenaufnahme 2 vor. Der Sauganschluss 24 bildet hier einen Anschlag der Vorrichtung 12 an das Gerätegehäuse 4 beim Einführen des Reinigungselements 14 in die Chipkartenaufnahme 2.

Zur Abdichtung der Vorrichtung 12 gegenüber dem Gerätegehäuse 4 ist der Sauganschluss 24 mit einer Dichtung 29 versehen. Außerdem weist der Sauganschluss 24 eine Ansaugöffnung 31 des Reinigungselements 14 auf.

In Figur 5 ist die Vorrichtung 12 in einer Seitenansicht, und zwar in einer Ansicht von außen auf den Sauganschluss 24, dargestellt.

Verschiedenartige Reinigungselemente 14 sind in Figuren 6a, 6b jeweils in einer Schnittansicht dargestellt. Die Schnittansichten korrespondieren mit einem Schnitt entlang Linie A - A wie in Figur 4 eingezeichnet.

Das jeweilige Ansaugelement 16 der Reinigungselemente 14 nach Figuren 6a, 6b weist eine Mehrzahl von Ansaugkanälen 32 auf. Die Ansaugkanäle 32 sind jeweils an der Außenseite des jeweiligen Reinigungselements 14 in Form von parallelen Längsrillen angeordnet.

In dem Ausführungsbeispiel nach Figur 6a besitzen die Ansaugkanäle 32 einen rechteckigen Querschnitt. In dem Ausführungsbeispiel nach Figur 6b weist die Oberfläche des Ansaugelements 16 eine Rillenstruktur mit zwischen den Rillen angeordneten im Querschnitt gewölbten Oberflächenabschnitten auf.

Ein in den Ansichten nach Figuren 6a, 6b linker Träger 34 und ein rechter Träger 36 des Ansaugelements 16 stehen in Richtung auf einen Sauganschluss 24 vor und dienen einer lösbaren Verbindung des Ansaugelements 16 mit dem Sauganschluss 24. Bei Verbindung von Ansaugelement 16 und Sauganschluss 24 sind die Ansaugkanäle 32 des Ansaugelements 16 an einer Außenseite des Reinigungselements 14 an der Ansaugöffnung 31 des Reinigungselements 14 angeordnet. Ein Reinigen der Chipkartenaufnahme 2 erfolgt durch ein Absaugen von beispielsweise Schmutzpartikeln aus der Chipkartenaufnahme 2 heraus entlang der Ansaugkanäle 32 in die Ansaugöffnung 31 hinein.

Eine weitere Vorrichtung 12 zum Reinigen einer einen Einführschlitz 6 (vergleiche Figur 1) zum Einführen einer Chipkarte aufweisenden Chipkartenaufnahme 2, wobei die Vorrichtung 12 ein durch den Einführschlitz 6 einführbares Reinigungselement 14 aufweist, ist in Figur 7 in einer teilweise geschnittenen Darstellung gezeigt. Ein Ansaugelement 16 des Reinigungselements 14 ist lösbar mit einem Sauganschluss 24 verbunden.

Zur Verdeutlichung dieser Lösbarkeit sind in Figur 7 das Ansaugelement 16 und der Sauganschluss 24 gelöst voneinander und mit einem Abstand zueinander dargestellt. Zur Verbindung von Sauganschluss 24 und Ansaugelement 16 greifen vorstehende Träger 34, 36 des Ansaugelements 16 in korrespondierende Ausnehmungen 38, 40 des Sauganschlusses 24 ein. Ein Verriegelungsstift 42 oder ein Verriegelungsnocken an dem Sauganschluss 24 dient einer Arretierung des Sauganschlusses 24 an einer Ansaugleitung einer Saugeinrichtung.

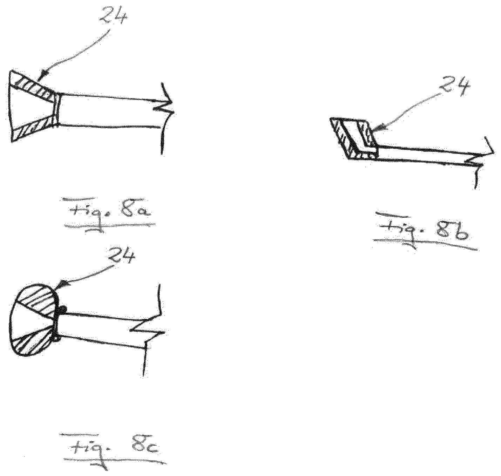

In Figuren 8a bis 8c sind beispielhaft drei verschiedenartige Sauganschlüsse 24, die jeweils eine unterschiedliche Anschlussform zu einer Verbindung eines Reinigungselements 14 einer Vorrichtung 12 zum Reinigen einer Chipkartenaufnahme 2 mit einer Ansaugleitung einer Saugeinrichtung aufweisen, dargestellt. In Figur 8a ist ein Sauganschluss 24 dargestellt, der eine als Trichter ausgebildete Anschlussform aufweist. In Figur 8b ist ein Sauganschluss 24 dargestellt, der eine winkelförmige Anschlussform aufweist, und Figur 8c zeigt einen Sauganschluss 24 mit einer als Kreisring ausgebildeten Anschlussform.

## Patentansprüche

1. Vorrichtung (12) zum Reinigen einer einen Einführschlitz (6) zum Einführen einer Chipkarte aufweisenden Chipkartenaufnahme (2), wobei die Vorrichtung (12) ein durch den Einführschlitz (6) in die Chipkartenaufnahme (2) zumindest teilweise einführbares Reinigungselement (14) aufweist, **dadurch gekennzeichnet, dass** das Reinigungselement (14) ein in die Chipkartenaufnahme (2) einführbares Ansaugelement (16) aufweist.

2. Vorrichtung nach Anspruch 1, **dadurch gekennzeichnet, dass** das Ansaugelement (16) eine der Chipkartenbreite entsprechende Ansaugelementbreite (BA) aufweist.

3. Vorrichtung nach Anspruch 1 oder 2, **dadurch gekennzeichnet, dass** das Ansaugelement (16) als Hohlkörper ausgebildet ist und zumindest eine mit einem einen Saugraum bildenden Hohlraum (22) des Hohlkörpers verbundene Saugöffnung (18) aufweist.

4. Vorrichtung nach einem der vorhergehenden Ansprüche, **dadurch gekennzeichnet, dass** das Ansaugelement (16) als quaderförmiger Hohlkörper ausgebildet ist.

5. Vorrichtung nach einem der vorhergehenden Ansprüche, **dadurch gekennzeichnet , dass** das Ansaugelement (16) zumindest einen Ansaugkanal aufweist.

6. Vorrichtung nach Anspruch 5, **dadurch gekennzeichnet, dass** das Reinigungselement (14) eine Ansaugöffnung (31) aufweist und dass der Ansaugkanal (32) oder die Ansaugkanäle des Ansaugelements (16) an einer Außenseite des Reinigungselements (14) an der Ansaugöffnung (31) angeordnet sind.

7. Vorrichtung nach Anspruch 5 oder 6, **dadurch gekennzeichnet, dass** zumindest zwei Ansaugkanäle (32) vorhanden sind und dass das Reinigungselement (14) die Ansaugkanäle (32) an seiner Außenseite in Form von parallelen Längsrillen aufweist.

8. Vorrichtung nach einem der vorhergehenden Ansprüche, **dadurch gekennzeichnet, dass** die Vorrichtung (12) einen Sauganschluss (24) für eine Verbindung des Reinigungselements (14) mit einer Ansaugleitung einer Saugeinrichtung aufweist.

9. Vorrichtung nach Anspruch 8, **dadurch gekennzeichnet, dass** der Sauganschluss (24) lösbar mit dem Ansaugelement (16) verbunden ist.

10. Vorrichtung nach Anspruch 8 oder 9, **dadurch gekennzeichnet, dass** der Sauganschluss (24) gegenüber dem Ansaugelement (16) vorspringt quer zur Einführrichtung des Ansaugelements (16) in die Chipkartenaufnahme (2).
